# EUROPEAN PATENT APPLICATION

(11) **EP 2 202 825 A1**
(43) Date of publication of application: **30.06.2010**
(21) Application number: 08832856.2
(22) Date of filing: 24.09.2008
(51) Int. Cl.: H01M 2/30, H01M 2/10, H01M 2/20

(54) **BATTERY PACK**

(30) Priority: 28.09.2007 JP 2007255903
(71) Applicant: Kabushiki Kaisha Toshiba, Minato-ku Tokyo 105-8001 (JP)
(72) Inventor: SEKINO, Masahiro, Tokyo 105-8001 (JP); MURO, Nagaaki, Tokyo 105-8001 (JP); SHIMIZU, Norio, Tokyo 105-8001 (JP); HATA, Yuusaku, Tokyo 105-8001 (JP); KANETSUNA, Tsutomu, Yokohama-shi Kanagawa 235-8522 (JP); SATO, Kenji, Tokyo 103-0023 (JP); SHIGEHISA, Kenji, Tokyo 103-0023 (JP)
(74) Representative: HOFFMANN EITLE
(86) International application number: PCT/JP2008/002625
(87) International publication number: WO 2009/041018

(57) **Abstract**

A battery pack is provided, in which external connection terminals are arrayed in the same direction in the module having the plurality of cells connected in series and a wiring that cuts across the module is not generated, and, in which improvement of the workability and reduction of connection failures are achieved by only connecting between the units by means of a bus bar when creating the module. Three pieces of flat-plate cells 2a to 2c are arranged in parallel to configure a three-piece unit 1. A positive electrode terminal 3 and negative electrode terminal 4 are provided at the top of each of the cells 2a to 2c. The negative electrode terminal 4 of the first cell 2a and the positive electrode terminal 3 of the second cell 2b are connected with each other by a first bus bar 5 disposed in an oblique direction, and the negative electrode terminal 4 of the second cell 2b and the positive electrode terminal of the third cell 2c are connected with each other by a second bus bar 6 disposed in a direction perpendicular to the longitudinal direction of the cells. Two pieces of flat-plate cells 12a, 12b are arranged in parallel to configure a two-piece unit 11. The positive electrode terminals 13 and the negative electrode terminals 14 of the cells 12a, 12b are connected with each other by a second bus bar 16.

## Description

### TECHNICAL FIELD

The present invention relates to a battery pack configured by connecting a plurality of cells in series, and particularly to a technology that is capable of shortening the wirings when extracting, to the outside, a module terminal that is formed when constructing the serial connection.

### BACKGROUND ART

As described in Patent Document 1, for example, configuring a high-voltage battery pack by connecting a plurality of cells in series has been conventionally known. However, a conventional industrial battery pack or motor vehicle battery pack has substantially a cubic shape in consideration of volumetric efficiency. For this reason, long wirings are generated in order to extract, to the outside, a module terminal generated when constructing the serial connection, and the module configuration needs to be reexamined each time when changing the number of serial connections depending on the products.

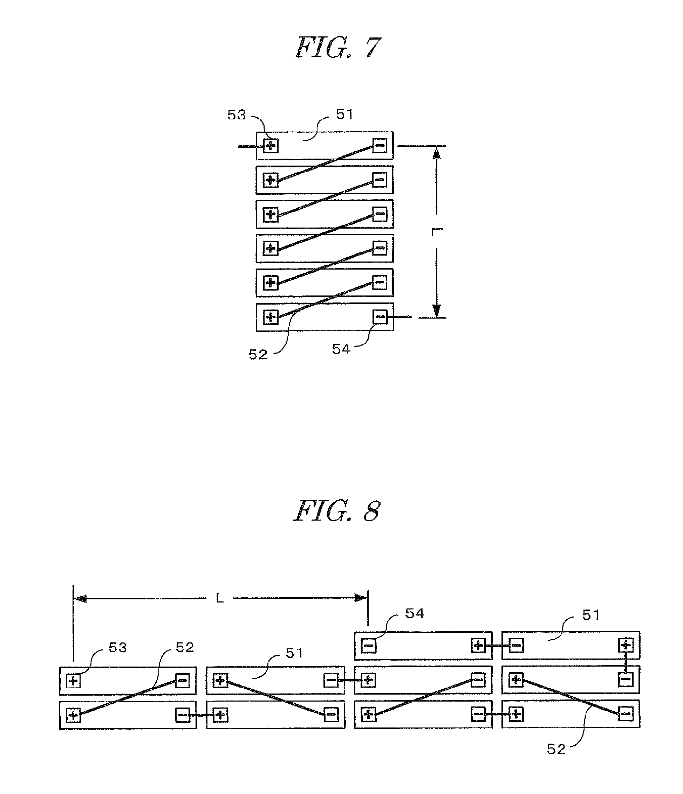

For example, Fig. 7 shows an example of a serial connection configuring the entire battery pack into substantially a cubic shape, wherein a plurality of cells 51 are arranged in parallel, and each pair of cells 51 is connected by a bus bar 52. In this conventional technology, because a positive electrode terminal 53 and a negative electrode terminal 54 are positioned on both ends of the module, the directions to draw wirings from the both electrodes are different. For this reason, a wiring needs to cut across the module in order to bundle the wirings of the both electrodes together, increasing the wiring length L.

In addition, when there is a limit in the arrangement space for a battery pack, as in an electrically-assisted bicycle, a rectangular parallelepiped flat module is required for the convenience of installing the pack. Thus, use of a long wiring significantly reduces the volumetric efficiency more, compared to the structure in substantially a cubic shape. For example, in a battery pack used in an electrically-assisted bicycle in Fig 8, ten thin cells 51 are connected in series by using the bus bars 52, and the thickness of this serial connection is restricted to up to approximately three cells.

As a result, in order to extract the electric power from the serially connected module terminals to the outside, wirings are connected to the positive electrode terminal 53 and the negative electrode terminal 54 that are positioned at the ends of the module, requiring a wiring with long wiring length L that cuts across the module. Although it is preferred to use a highly rigid bus bar or other conductive member to reduce the connection resistance between the cells, it is troublesome to prevent each of the plurality of bus bars from intersecting with another bus bar, or to connect the bus bars to discretely and individually provided cells, and there is a problem where connection failures occur.
{Patent Document 1}: Japanese Patent Application Publication No. 2004-200017

As described above, the problems of the conventional technology are that the workability in connecting individual battery cells is low and therefore connection failures occur easily because the individual battery cells are connected one by one by a bus bar, and that the length of a wiring increases because the electric power is extracted from the terminals on both ends of each of serially connected modules to the outside.

### DISCLOSURE OF THE INVENTION

The present invention was contrived in order to solve the problems of the conventional technology described above, and an object of the present invention is to provide a battery pack, in which a plurality of cells connected by bus bars are unitized, thus obtained unit is combined and connected with another unit or cells to configure a battery module, so that external connection terminals are arrayed in the same direction in the module having the plurality of cells connected in series and a wiring that cuts across the module is not generated, furthermore, in which improvement of the workability and reduction of connection failures are achieved by only connecting between the units by means of a bus bar when creating the module.

In order to achieve the object described above, the present invention is a battery pack in which three cells each having a positive electrode terminal and negative electrode terminal are arranged in parallel and electrically connected in series, wherein: the positive electrode terminals and the negative electrode terminals of two of the three cells are arranged in the same direction, the positive electrode terminal and the negative electrode terminal of the remaining one cell are arranged in a direction opposite to the direction of the positive electrode terminals and the negative electrode terminals of the two cells; between the two cells having positive electrodes and the negative electrodes thereof arranged in the same direction out of the three serially connected cells, the positive electrode terminal and the negative electrode terminal of the two cells are connected by a bus bar disposed in an oblique direction; between the two cells having positive electrodes and negative electrodes thereof arranged in the opposite direction out of the three serially connected cells, the positive electrode terminal and the negative electrode terminal of the two cells are connected by a bus bar perpendicular to a length direction of the two cells; and a positive electrode terminal and negative electrode terminal for external wiring connection are arranged in the same direction of the three cells arranged in parallel.

In one aspect of the present invention, the three-piece unit described above is combined with a two-piece unit which is obtained by serially connecting two cells, and wiring connection terminals are arranged in the same direction. In another aspect of the present invention, in addition to the three-piece unit and the two-piece unit, another unit is connected in series to connect more cells in series, and the wiring connection terminals are arranged in proximity to each other in the same direction.

As a result of using the present invention, because the wiring connection terminals of the battery module can be arranged in proximity to each other in the same direction, a wiring cutting across the module is no longer necessary. Moreover, a module with more cells is created by using a three-piece unit or two-piece unit having a plurality of cells, whereby the efficiency of connecting a large number of cells is improved.

### BRIEF DESCRIPTION OF THE DRAWINGS

Fig. 1 is a plan view showing an example of a three-piece unit according to the present invention;
Fig. 2 is a plan view showing an example of a two-piece unit according to the present invention;
Fig. 3 is a plan view showing an example of a battery module configured by the three-piece unit and the two-piece unit of the present invention;
Fig. 4 is a plan view showing an example of a module in which other three-piece unit and two-piece unit are combined with the abovementioned three-piece unit and two-piece unit of the present invention and ten cells are connected in series;
Fig. 5 is a plan view showing an example of a battery module configured by connecting two three-piece units and three two-piece units together;
Fig. 6 is a plan view showing an example of a battery module configured by connecting four three-piece units;
Fig. 7 is a plan view showing an example of a conventional battery module; and
Fig. 8 is a plan view showing another example of the conventional battery module.

### EXPLANATION OF REFERENCE NUMERALS

1, 1' ... Three-piece unit
2a to 2c ... Cell
3 ... Positive electrode terminal
4 ... Negative electrode terminal
5, 6 ... Internal connection bus bar
11, 11' ... Two-piece unit
12a, 12b ... Cell
13 ... Positive electrode terminal
14 ... Negative electrode terminal
16 ... Internal connection bus bar
30 ... Housing
31, 32 ... External connection bus bar

### BEST MODE FOR CARRYING OUT THE INVENTION

### {1. First Embodiment}

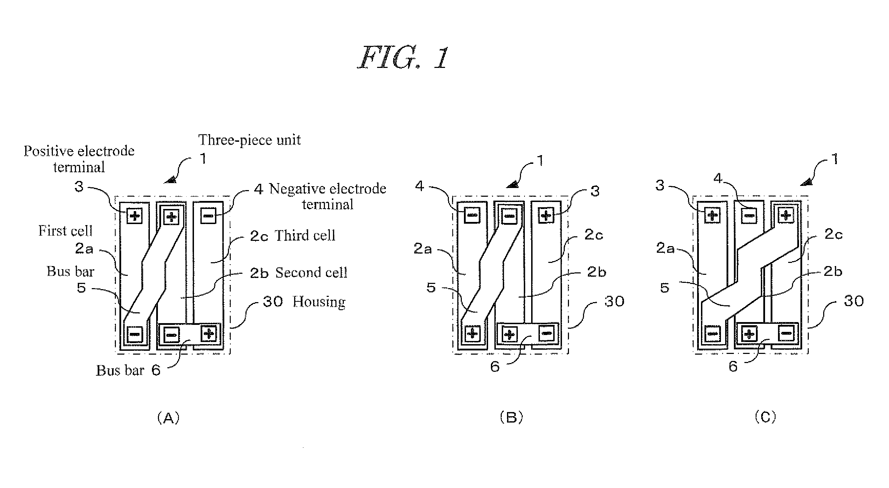

A first embodiment of the present invention is described hereinafter in detail with reference to Figs. 1 to 3.

Fig. 1(A) shows a three-piece unit 1 of a battery pack of the present embodiment. In this three-piece unit 1, three pieces of flat-plate cells 2a to 2c are arranged in parallel along the longitudinal direction thereof, and a positive electrode terminal 3 and negative electrode terminal 4 are provided at the top of each of the cells 2a to 2c. In this case, in the first and second cells 2a, 2b the positive electrode terminals 3 and the negative electrode terminals 4 are arranged in the same direction, and in the third cell the positive electrode terminal 3 and the negative electrode terminal 4 are arranged in direction opposite to each other.

The negative electrode terminal 4 of the first cell 2a and the positive electrode terminal 3 of the second cell 2b are connected with each other by an internal connection bus bar 5 disposed in an oblique direction, and the negative electrode terminal 4 of the second cell 2b and the positive electrode terminal of the third cell 2c are connected with each other by an internal connection bus bar 6 disposed in a direction perpendicular to the longitudinal direction of the cells. In this manner, the first cell 2a to the third cell 2c are connected in series, and the positive electrode terminal 3 of the first cell 2a and the negative electrode terminal 4 of the third cell 2c are arranged in the same direction.

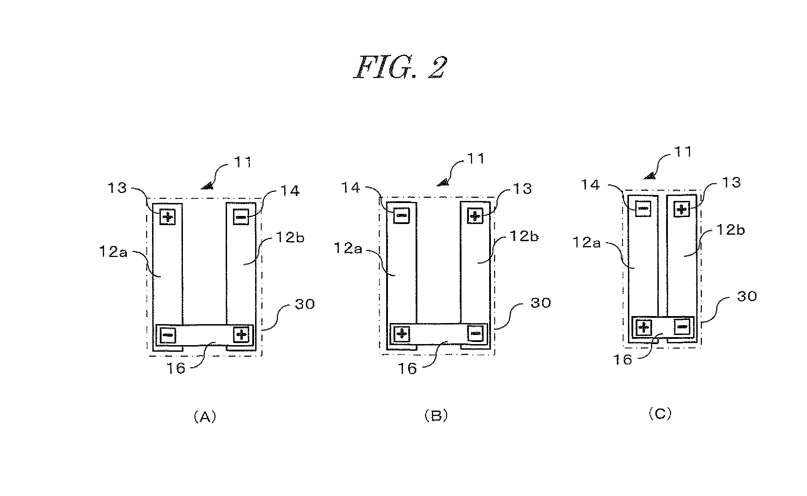

Fig. 2(A) shows a two-piece unit 11 of the battery pack of the present invention. In this two-piece unit 11, two pieces of flat-plate cells 12a, 12b are arranged in parallel along the longitudinal direction thereof, and a positive electrode terminal 13 and negative electrode terminal 14 are provided at the top of each of the cells 12a, 12b. In this case, the positive electrode terminals 13 and the negative electrode terminals 14 of the respective first and second cells 12a, 12b are arranged in direction opposite to each other.

The negative electrode terminal 14 of the first cell 12a and the positive electrode terminal 13 of the second cell 12b are connected with each other by an internal connection bus bar 16 disposed in a direction perpendicular to the longitudinal direction of the cells. In this manner, the first cell 12a and the second cell 12b are connected in series, and the positive electrode terminal 13 of the first cell 12a and the negative electrode terminal 14 of the second cell 12b are arranged in the same direction.

According to one aspect of the present embodiment, in the three-piece unit 1 and the two-piece unit 11 shown in Fig. 1 and Fig. 2 respectively, the positive electrode and the negative electrode of each cell are inverted, and thereby inverting the position of the positive electrode terminal and the position of the negative electrode terminal that connect an external wiring. Fig. 1(B) and Fig. 2(B) show this configuration. Moreover, regarding the two-piece unit 11, in the embodiments shown in Figs. 2 (A) and 2(B), the two cells 12a, 12b are arranged with an interval of one cell in order to obtain the same outside dimension as the three-piece unit 1, but 2/3 of the width dimension of the three-piece unit 1 can be obtained by arranging the two cells in proximity to each other, as shown in Fig. 2(C). Although not shown, according to one aspect of the present embodiment, the positive electrode and the negative electrode of each cell shown in Fig. 2(C) are inverted, and thereby inverting the position of the positive electrode terminal and the position of the negative electrode terminal that connect the external wiring.

It is desired that each of the units shown in Figs. 1(A), 1(B) and Figs. 2(A), 2 (B) be stored in a housing 30, as shown by a dashed-and-dotted line in the each diagram. In this case, it is desired that only the external wiring connection positive electrode terminal and negative electrode terminal be exposed from the housing 30, and that the bus bar connecting the other terminals or cells be stored in the housing. In addition, although not shown, a connection engaging part (a click and a recess part to hook the click) can be provided outside the housing 30.

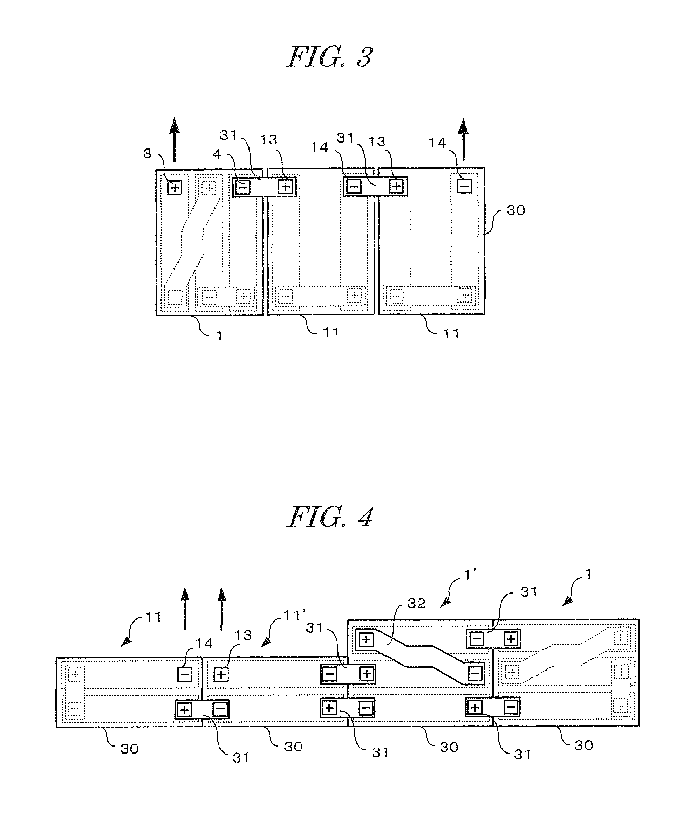

The battery pack of the present embodiment is constructed by combining the three-piece unit 1 with the two-piece unit 11. Fig. 3 shows how seven cells are connected in series by combining one three-piece unit 1 with two two-piece units 11. In this case, the three-piece unit 1 shown in Fig. 1(A) and the two-piece units 11 shown in Figs. 2(A) and 2(B) are arranged in adjacent to one another, and the positive electrode terminal and the negative electrode terminal of each of these units 1, 11 are connected by an external connection bus bar 31, whereby a battery module having the seven battery cells connected in series can be obtained.

In the battery module shown in Fig. 3, the seven battery cells are aggregated into a small-volume cubic shape and arranged, wherein the external wiring connection positive electrode terminal and negative electrode terminal that are provided to both ends of the module are disposed in the same direction of the module. As a result, the benefit of not requiring a wiring cutting across the module is achieved, unlike the conventional technology shown in Fig. 7. Moreover, when connecting the seven cells in series, the prepared three units may be connected by using the two external wiring connection bus bars 31, 32, thus the workability in connecting the units becomes simple and the occurrence of connection failures can be prevented. Further, attaching the external connection bus bars without displacing the units can be carried out efficiently by providing the connection engaging part in the housing 30.

### {2. Second Embodiment}

In Fig. 4, in addition to the three-piece unit 1 and the two-piece unit 11 shown in Figs. 1 and 2, a different type of three-piece unit 1' and different type of two-piece unit 11' that are similarly configured by storing three or two cells in the housing 30 are used for connecting ten cells in series.

In this embodiment, as with the three-piece unit 1 shown in Fig. 1, the three-piece unit 1' has the oblique bus bar 32 for connecting the positive electrode terminal with the negative electrode terminal in each of adjacent cells. However, this bus bar 32 is not an internal connection bus bar for connecting the cells of the unit beforehand, but an external connection bus bar that connects the positive electrode terminal and the negative electrode terminal of the cell exposed from the housing 30, from the outside of the housing 30. In this three-piece unit 1', the positive electrode terminal and the negative electrode terminal of each of the three cells are exposed from the housing 30, and there is no perpendicular bus bar that connects the positive electrode terminal with the negative electrode terminal in each of the adjacent cells. In other words, in this three-piece unit 1', positive electrode terminals and negative electrode terminals other than those terminals connected by the oblique external connection bus bar 32 are not for connecting the cells in the unit, but are connected to the terminals of other units by the external connection bus bars 31.

Similarly, in the two-piece unit 11', two cells are stored in the housing 30, and the positive electrode terminal and the negative electrode terminal of each of the two cells are exposed from the housing 30. There is no perpendicular bus bar that connects the adjacent cells in the unit, thus the positive electrode terminal and the negative electrode terminal are connected to the terminals of other units by the external connection bus bars 31.

In the present embodiment, the four types of units described above are arranged in an elongated form in order of the two-piece unit 11, the two-piece unit 11', the three-piece unit 1' and the three-piece unit 1 such that the thickness of the three cells becomes the maximum width, and the positive electrode terminals and the negative electrode terminals between the adjacent units are connected by external connection bus bars 33, whereby a battery module is formed.

As a result of using the second embodiment in such a configuration, the three-piece unit 1 shown in Fig. 1 and the two-piece unit 11 shown in Fig. 2 are arranged at the ends of the module, and the directions of the cells of the other three-piece unit 1' and two-piece unit 11' arranged therebetween and the connection structure of the external connection bus bars 31, 32 are devised, so that the positions of the wirings on the positive electrode side and the negative electrode side that are connected to the battery module can be brought close to each other, and reduction of the length of the wirings and elimination of the wiring cutting across the module can be achieved. Furthermore, by using the prepared three-piece unit 1 and two-piece unit 11, simplification of the connecting work and reduction of the connection failures can be expected, as with the embodiment in Fig. 3.

### {3. Other Embodiments}

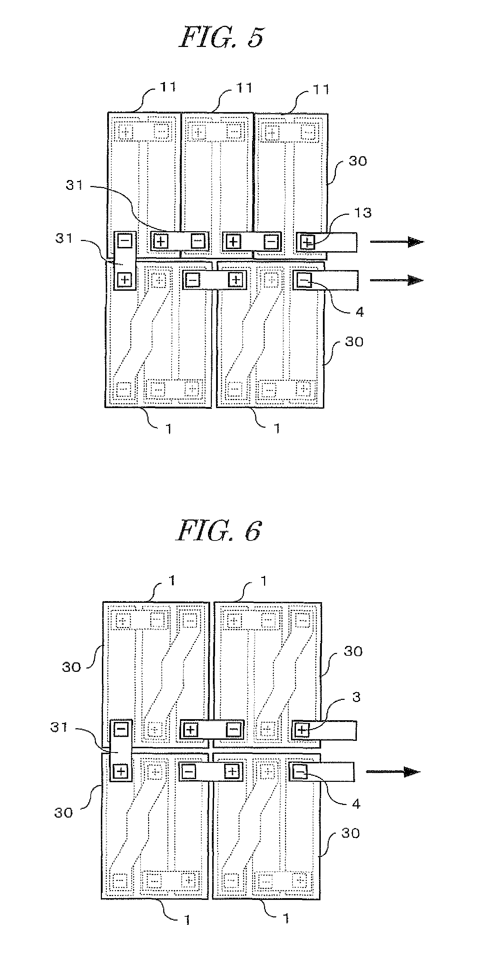

The present invention encompasses not only the embodiments described above, but also the following embodiments.
(1) It is not always necessary to use a combination of the three-piece unit and the two-piece unit, and thus a combination of a plurality of three-piece units only can be used for forming a module, depending on the number of cells required to form the module. For example, in the embodiment shown in Fig. 4, by removing the far-left two-piece unit 11, eight cells can be used for obtaining a module in which wiring terminals are arranged in proximity to each other, and, by combining only the three-piece unit 1 with the three-piece unit 1', the same effects can be expected using six cells.
(2) In the three-piece unit 1' according to the embodiment shown in Fig. 4, the adjacent cells are connected by the external connection bus bar 32 disposed in an oblique direction. However, in place of the external connection bus bar 32 disposed in an oblique direction, the adjacent cells can be connected by the obliquely-disposed internal connection bus bar 5 beforehand, as with the three-piece unit 1 shown in Fig. 1. In this case, the work for connecting the terminals of each cell stored in the housing 30 during production of the module can be eliminated, improving the work efficiency.
(3) As shown in Fig. 1(C), the cells positioned on both sides of three cells may be connected by the oblique internal connection bus bar 5. In this embodiment, although the length of the internal connection bus bar 5 increases, the wirings connected to the three-piece unit 1 can be brought close to each other.
(4) As shown in Fig. 5, two three-piece units 1 and three two-piece units 11 can be connected to configure a battery module, or, as shown in Fig. 6, four three-piece units 1 can be connected to configure a battery module. Note that the connection configuration shown in Fig. 6 can be adopted similarly when connecting four two-piece units to configure a battery module.

## Claims

1. A battery pack in which three cells each having a positive electrode terminal and negative electrode terminal are arranged in parallel and electrically connected in series, wherein:
the positive electrode terminals and the negative electrode terminals of two of the three cells are arranged in the same direction, the positive electrode terminal and the negative electrode terminal of the remaining one cell are arranged in a direction opposite to the direction of the positive electrode terminals and the negative electrode terminals of the two cells;
between the two cells having positive electrodes and the negative electrodes thereof arranged in the same direction out of the three serially connected cells, the positive electrode terminal and the negative electrode terminal of the two cells are connected by a bus bar disposed in an oblique direction;
between the two cells having positive electrodes and negative electrodes thereof arranged in the opposite direction out of the three serially connected cells, the positive electrode terminal and the negative electrode terminal of the two cells are connected by a bus bar perpendicular to a length direction of the two cells; and
a positive electrode terminal and negative electrode terminal for external wiring connection are arranged in the same direction of the three cells arranged in parallel.

2. A battery pack in which two cells each having a positive electrode terminal and negative electrode terminal are arranged in parallel and in a direction opposite to each other, the electrode terminal and negative electrode terminal of the two cells are connected by a bus bar perpendicular to a length direction of the two cells, so that the two cells are electrically connected in series to configure a two-piece unit, wherein:
a positive electrode terminal and negative electrode terminal for external wiring connection in the two-piece unit are arranged in the same direction of the two cells arranged in parallel; and
the two-piece unit and the three-piece unit according to claim 1, are electrically connected in series by a bus bar, so that a battery module is configured from the two-piece unit and the three-piece unit electrically connected in series, and a positive electrode terminal and negative electrode terminal for external wiring connection of the battery module are arranged in the same direction of the battery module.

3. The battery pack according to claim 1 or claim 2, wherein the cells configuring the unit are stored in a housing for each unit.

4. A battery pack in which ten cells are electrically connected in series, and configured from the three-piece unit according to claim 1, the two-piece unit according to claim 2, another three-piece unit configured by arranging three cells in parallel, and another two-piece unit configured by arranging two cells in parallel, wherein:
out of the two two-piece units and the two three-piece units, each two units configured by the same number of cells are adjacent to each other such that the three-piece unit of claim 1 and the two-piece unit of claim 2 are positioned on either ends of the module; and
connection of terminals of the respective units and connection of terminals of the cells configuring the three-piece unit of claim 1, are made by bus bars.
